(19) Europäisches Patentamt
European Patent Office
Office européen des brevets

(11) Publication number: 0 155 850
A2

# (12) EUROPEAN PATENT APPLICATION

(21) Application number: 85301934.7

(22) Date of filing: 20.03.85

(51) Int. Cl.4: A 01 M 7/00
B 05 B 9/06

(30) Priority: 20.03.84 GB 8407163

(43) Date of publication of application:
25.09.85 Bulletin 85/39

(84) Designated Contracting States:
AT BE CH DE FR GB IT LI LU NL SE

(71) Applicant: Gill, David Charles
5 The Keep Millers Lodge
Warmley Bristol BS15 5YQ(GB)

(72) Inventor: Gill, David Charles
5, The Keep Millers Lodge
Warmley Bristol BS15 5YQ(GB)

(72) Inventor: Freeman, Jonathan Bruce
190, Bedminster Down Road
Bristol BS13 7AF(GB)

(74) Representative: Cheyne, John Robert Alexander Mackenzie et al,
HASELTINE LAKE & CO. 28 Southampton Buildings
Chancery Lane
London WC2A 1AT(GB)

## (54) Apparatus for distributing fluid.

(57) Apparatus for distributing, for example, weed-killer comprises delivery members (112,114) which are supplied with the weedkiller by a pump (102). The delivery member (112, 114) comprise rotating discs, the speed of which is controlled by a central processing unit (CPU)(250). The CPU (250) also controls the output of the pump (102) in order to regulate the flowrate of weedkiller in response to a preset area concentration (dose selector (104)) and the travel speed (wheel pick-up (100)). The delivery of weedkiller per unit area thus remains constant regardless of the travel speed.

EP 0 155 850 A2

./...

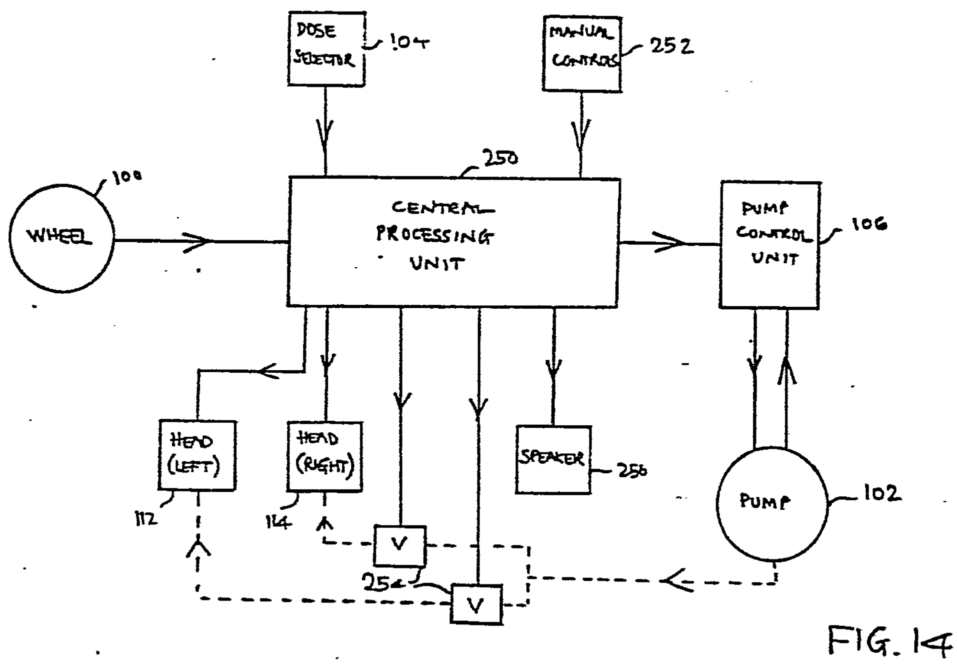

DOSE SELECTOR
104
MANUAL CONTROLS
252
250
WHEEL
100
CENTRAL PROCESSING UNIT
PUMP CONTROL UNIT
106
HEAD (LEFT)
HEAD (RIGHT)
SPEAKER
256
PUMP
102
112
114
V
254
V


FIG. 14

APPARATUS FOR DISTRIBUTING FLUID

This invention relates to apparatus for distributing fluid.

When delivering a quantity of fluid to a particular area, in particular when applying a potent and expensive weedkiller to an area of land, it is important to deliver an accurately measured quantity of fluid to a known area of ground.

A known weedkiller delivery apparatus comprises a delivery member and a pump for supplying the weedkiller to the delivery member. The speed of the pump determines the quantity of weedkiller delivered. The delivery member comprises a rotary disc, the rotary speed of which determines the fluid spray radius.

In the known apparatus, the pump is either on or off. When on, the pump delivers the fluid at a substantially constant rate. Consequently, if even spraying is to be achieved, the apparatus must travel across the ground at a constant speed. This is impossible to achieve in practice. Changes in gradient, manoeuvring to avoid obstacles and operator error will all result in speed variations, particularly when the apparatus is controlled by a pedestrian operator.

According to the present invention, control means for the pump is responsive to a travel speed signal, representing the travel speed of the apparatus across the ground, and a dose signal, representing the required area concentration of fluid to be distributed, the control means being adapted to generate a pump control signal to which the pump is responsive to supply fluid to the delivery member at a flow rate corresponding to the desired area concentration.

For a better understanding of the present invention, and to show how the same may be carried into effect, reference will now be made, by way of example, to the accompanying drawings, in which:

Figure 1 is a block diagram illustrating the operation of a system having several motors each driving a delivery means and running at the same speed;

Figure 2 is a block diagram illustrating the operation of a system having a single delivery means;

Figure 3 is a circuit diagram of a filter used to filter the voltage across a resistor connected in series with the current supply to the motor;

Figure 4 is a circuit diagram of a "master" control circuit used to control the motor speed;

Figure 5 is an auxiliary control circuit, used in conjunction with that shown in Figure 2 when more than one motor is controlled in a unit, the motors running at different speed;

Figure 6 is a "slave" circuit used when a number of motors are contained in a unit, the motors running at the same speed;

Figure 7 shows a block diagram of a system which is capable of delivering chemical in a manner dependent on the road speed of a vehicle on which a fluid delivering unit is mounted;

Figure 8a is a side view of a suitable speed pick-up device;

Figure 8b is an end view looking in the direction of Arrow VIII in Figure 8a, but with the details of the hub assembly having been removed for the sake of clarity;

Figure 9 is a circuit diagram of one embodiment of an alarm system which may be used;

Figure 10a illustrates circuitry which may be used to set the pump speed and running speed of the other motor(s);

Figure 10b illustrates one embodiment of the on/off switching circuitry;

Figure 11 illustrates the circuitry which may be used to implement blocks 51 to 54 of Figure 5;

Figure 12 illustrates the circuitry which may be used to implement blocks 55 to 57 of Figure 5;

Figure 13 illustrates a circuit for determining when the road speed exceeds predetermined limit values; and

Figure 14 is a block diagram representing an alternative embodiment.

In Figure 1 a block diagram of an apparatus in which the pump speed is dependent on the speed of a vehicle to which the pump is mounted and in which two or more motors driving fluid delivering discs are to run at the same speed is shown.

In the embodiment shown in Figure 1, a road speed pick up unit 100 controls the speed of the pump 102, via a chemical dose rate adjuster 104 and pump control 106, in response to the road speed of a vehicle on which the pump and fluid delivery discs are mounted. Although the term "road speed" is used throughout to indicate the speed of the vehicle, it will be appreciated that the vehicle will generally be used on fields or areas of rough terrain and not necessarily on roads. The pump 102 is connected, via a valve 108, to a source of the chemical to be delivered, such as chemical tank 110.

The speed of the discs or heads 112, 114 etc, is controlled by a head speed selector 116 via head speed controls 118, 120, (to be described in more detail hereinafter), the pump delivering the chemical to the heads via fluid channel 122. Any suitable number of heads may be incorporated in the unit.

The pump and head speed controls 106, 118, 120 are connected to a warning device and alarm circuitry 124, 126.

A light emitting diode 128 indicates when the road speed is within acceptable limits.

As shown in Figure 2, the pump 102 may deliver a chemical or a cleaner to the head 112 from either of two sources 110 and 111 respectively. In Figure 2 like reference numerals are used to indicate like parts as shown in Figure 1.

Figure 3 is a circuit diagram of a filter used to filter the output of a current sensing resistor R1. There is a circuit such as that shown in Figure 3 for the motors driving the pump, and each of the heads, in a particular unit. The values of resistors R2, R3, R4 and of capacitors C4, C5 are selected to obtain the desired pass bands of the filter. The current sensing resistor R1 is in series with the negative lead to the motor. With a permanent magnet low voltage D.C. motor, the supply current to the motor varies as the commutator rotates. The varying motor current produces corresponding voltage variations across R1. These variations are passed through capacitor C1 to a second order Butterworth low pass active filter stage formed by R2, R3, R4, C2, C3 and IC1a. This low pass filter stage removes excessive high frequency components, produced, for example, by brush arcing, from the voltage waveform. This stage also imposes an upper frequency limit corresponding to an upper speed limit of the motor. The output of this stage is then fed to a second order Butterworth high pass active filter stage formed by C4, C5, C6, R5, R6, and IC1b. This filter removes any low frequency "rumble" effects and also imposes a lower frequency (speed) limit corresponding to a lower speed limit of the motor. IC1c is connected as a high gain voltage amplifier, the gain of which is adjusted by resistor R8. C9, R9, T5, and T6 form the last filter stage and serve to remove any "ramping" effect by the clamping action of transistors T5 and T6. IC1d forms a simple Schmitt trigger circuit with about 10% hysteresis. This removes the remaining noise from the signal and converts it to an acceptable digital waveform. Point D is the reference voltage line which will be half of the supply voltage to the filter. This line is common to all filters in any unit, as is the supply voltage, which is derived from an internal voltage regulator within a phase locked loop. Capacitor C7 serves to decouple the reference line, and capacitor C8 decouples the supply. C7 and C8 are required on all filters. The supply voltage will generally be about 7 volts which accommodates a wide variation of incoming voltages across resistor R1.

Figure 4 is a circuit diagram of a "master" control circuit loop used to control the motor speed (indicated by reference numerals 118 in Figures 1 and 2). The phase locked loop (P.L.L.) chip IC2 shown in Figure 4 contains a voltage controlled oscillator (V.C.O.) and a digital memory network type phase comparator. It will be appreciated that any suitable phase locked loop with an appropriate comparator therein could be used.

The output of the filter is applied to point C which is one input of the phase comparator. The other input of the comparator is connected directly to the V.C.O. output, and is also brought out to point J for measurement purposes. Point H comes from the speed setting controls (Figure 8a) and goes to the control input of the V.C.O.. Capacitor C14 is for decoupling. The voltage applied to the control input determines the frequency of the V.C.O.. C13, R14, R15, and R16 determine the range of frequencies covered by the V.C.O.. C11 and C12 are decouplers and R12, R17, and T1 complete the supply regulation. The phase comparator output is taken from pin 13 of IC2.

The phase comparator behaves as follows:-

If the frequency at point C is lower than the reference frequency supplied by the V.C.O. to pin 14 of IC2 and controlled from point H, then the output at pin 13 will remain at a logical "1" level, that is very close to the positive supply rail.

If the frequency at point C is <u>higher</u> than the reference frequency, then the output will remain at logical "0" close to the zero volt rail.

If one frequency "wobbles" equally about the other, then the output alternates between logic "1" and "0".

If both frequencies are identical and in phase, then the output becomes an open circuit.

The output signal of the P.L.L. is processed to provide the voltage to be applied to the motor. If this signal voltage was applied directly to the motor, then if the motor was running too slowly, it would have full power applied to it because the phase detector output would be at logical "1". Conversely, if the motor ran too fast, the output would be at logical "0" so turning the motor off. This would provide a crude form of control except for the fact that the filter would interpret the abrupt switching pulses as being valid rotation pulses from the motor, so introducing errors. To resolve this, the P.L.L. output signal is "averaged out" to a slowly varying D.C. level. This is achieved by a so called "loop response filter" formed by R13, C15, R18, and C16, which also determines the response time of the circuit. This filter output is buffered and amplified by IC3, the output of which is applied to a high gain current amplifier formed by T3, R22, and T4, and thence to the motor. T2 and associated components form a current limiting circuit.

The circuit shown in Figure 4 shows a "master" control circuit. For units containing more than one motor running at different speeds (Figure 2) one such circuit is required with the addition of an auxiliary circuit such as that shown in Figure 5 for each additional motor. In cases where several motors are to run at the same speed (Figure 1) then only one V.C.O. is required. Each motor will then feed a filter such as that shown in Figure 3, one filter will feed a "master" control circuit (Figure 4), and the remaining filters will feed a slave circuit such as that shown in Figure 6. It will be noted that, in Figure 6, there are no connections to the V.C.O. in this IC2.

Figure 7 shows a block diagram of a system which has a programmable fluid dose rate and delivers chemical in a manner that tracks the "road speed" of a vehicle on which a fluid delivery unit is mounted.

Considering each block in turn:-

Block 51 is a road speed pickup device 100. This should be capable of picking up several pulses per revolution as the road speed can be very slow and should be as maintenance free as possible.

A suitable device is shown in Figure 8 and is described in more detail hereinafter.

Block 52 is a crystal oscillator which provides a reliable reference frequency which is then divided down to a suitable value, e.g. 30 Hz which corresponds to a road speed of 3mph. This is used to set up the unit and also to provide an imaginary road speed for the unit of 3mph even when it is in fact at a lower speed.

Block 53 includes a phase comparator from a further P.L.L. and is used to determine whether the road speed is more or less than 3mph, by comparing the outputs from blocks 51 and 52.

Block 54 selects which signal is passed on to the next stage as determined by the output of block 53.

Block 55 contains another P.L.L. used as a frequency multiplier.

Blocks 56 and 57 are dividers.

The actual number that block 55 multiplies by is the product of the division ratios set by blocks 56 and 57. For example, if block 56 is dividing by 69 and block 57 is dividing by 4, then the total division is 69X4=276. The P.L.L. will try to adjust itself such that both inputs are of the same phase and frequency. That means that in this case, the V.C.O. will settle at a frequency equal to the input frequency from block 54 multiplied by 276. This frequency will be much too high for motor control so block 58 is used to divide this output frequency to compensate for over multiplication. The reason for over multiplying and subsequently dividing is to give a wide range of adjustments. Block 56 has 2 decades of settable division. This gives a range of adjustment of nine to one with 87 intermediate steps. It is block 56 which is used to compensate for pump wear or variations from one pump to another. The provision of only one decade is possible, but the output frequency would then be one tenth of the output value with 2 decades. This would mean that less division would be required in block 58 but it would also mean that there would be only 9 steps of adjustment.

Figures 8a and 8b illustrate a suitable pick up device. A disc 61 made of copper clad fibreglass laminate has a pattern of 27 vanes 62 etched onto it, partially shownin Figure 8b. The vanes are the same size as the spaces between them, and are all joined at the inner edge of the disc by a track 63 approx. 3mm wide. This inner track could be used to sweat the disc onto the shoulder 64 on the main hub assembly of a wheel of the vehicle. If another method of fixing is used then it will be necessary to otherwise ensure a good electrical contact between the disc 61 and the hub assembly. A fixed plate 65 has the same vane pattern etched onto it except the vanes are all joined at the outer circumference of the disc. This fixed plate 65 is extended to provide space for fixings and for an oscillator 66. It is desirable to mount the oscillator 66 in this position since, if it were mounted any appreciable distance from the disc, the capacitance of the wiring may be sufficient to swamp the very small capacitance changes to be picked up. Environmental protection could be provided by encapsulation of the oscillator.

The spacing between the discs should ideally be as small as possible and in any case not more than 1mm. The device would operate with the discs in contact, but this would lead to rapid wear. A non-metallic spacer could be used.

Reference numeral 67 designates a suitable fixing to bodywork of the vehicle.

The plates 61, 65 have an electrical capacitance between them. This is at a maximum when full overlap occurs, and a minimum when overlap does not occur. The actual capacitance will depend greatly on many factors such as temperature, humidity, exact spacing of the discs etc, however this does not cause a problem in the present case.

The capacitance is used as the tuning element of its oscillator. As the wheel rotates, so the capacitance passes through maxima and minima. For a wheel diameter of 0.34m, if there are 27 vanes, then there will be 10 cycles of max/min for every 1 mile per hour ($\sim 0.4ms^{-1}$). As the capacitance varies, so the frequency of the oscillator varies. The exact frequency of oscillation is of no consequence: what is important is the cyclic variation of this frequency. This wobbling frequency can easily be resolved using a P.L.L..

Figure 9 is a circuit diagram showing one embodiment of an audible and visual alarm system, by way of example only. Any suitable alarm system could be used. In the present system, two types of audible warning are provided, one is a continuous tone, the other is a pulsed tone or bleep. The provision of two different sounds permits an operator to determine where the problem lies. The circuit is composed of two substantially similar parts: one part powering an audible warning device (A.W.D.) 126 directly, the other powering a pulsing oscillator which in turn intermittently powers the A.W.D. via a blocking diode D12. As described with reference to Figure 4, if the motor is running too slowly, then the circuit will increase the voltage applied to the motor, regardless of the reason for slow (or non-) running. If the motor is jammed, or becomes disconnected, this is interpreted by the control circuitry as "running too slowly". Under these conditions, if the motor does not reach the correct running speed, the voltage applied will continue to rise until the voltage supplied from IC3 (Figure 4) reaches the supply rail, point F. For any given unit the maximum voltage to be applied to the motor during normal operation is known. If this voltage is exceeded a fault has probably occurred. The system described below will not indicate the nature of the fault but does cater for all possible malfunction conditions.

Referring to Figure 9, the voltage from pin 13 of IC3 (Figure 4 is applied to the base of transistor T7 through diode D1 and resistor R25. Diodes such as those designated by D1 are only used where several motors are to run at the same speed. Where different running speeds are required the G output of a circuit such as that shown in Figure 5 is fed to T7 via a resistor, in the same manner as T10.

The base-emitter junction of a transistor needs a forward bias of about 0.6 volt before current can flow from the collector to the emitter. In the emitter lead of T7 is a zener diode D2. This cannot pass a current until the voltage across it is the zener voltage Vz. Therefore T7 cannot begin to conduct until the voltage from G is at least Vz+0.6 V.. Resistor R25 limits the base current to a safe level. Once T7 begins to conduct, transistor T8 is turned on. The collector voltage of T8 then rises from zero to close to incoming supply, so applying power to IC4. IC4, D9, R28, R29, and C19 form a simple pulse generator, feeding pulses at a frequency of about 2Hz to the A.W.D. via blocking diode D12. Blocking diode D12 prevents a voltage being fed back to a timer of IC4 when transistor T9 is conducting. Transistors T9 and T10 operate in the same way as T7 and T8 except that when T9 is conducting, power is applied continuously to the A.W.D. producing a continuous tone.

S1a and S2a each designate one pole of a two pole multiway switch. Only three positions are shown for clarity. These switches select a) the light emitting diodes (L.E.D.) D3 to D8 (104, 116 in Figure 1) indicating the switch position, and b) the speed settings described in more detail hereinafter with reference to Figure 10. The forward voltage drop across a L.E.D. is in excess of 1 volt. When T8 is turned on, the voltage drop across T8 will be about 0.1, and the voltage drop across D10 will be 0.6V. This means that there is no longer more than 1 V across the L.E.D., so it can not operate. That is, when the A.W.D. operates, the L.E.D. goes out. R30 and R31 provide the current for the L.E.D.'s during normal operation. Capacitor C18 is included to decouple the supply to IC4 which needs to be reasonably clean to ensure reliable operation.

Figure 10a illustrates the switches 104, 116 used to set the speed of the pump and the fluid delivering head. Again, only three positions are shown for the sake of clarity. R35 to R40 are multi-turn presets forming potential dividers across the supply to the filter (Figure 3) and control circuitry (Figure 4). R41 and R42 are of the same value, therefore maintaining point D at a voltage half way between A (the filter and control circuit supply), and E (the zero volt line). This point is taken to point D on all filters.

Figure 10b illustrates one possible implementation of the on/off switching for a unit as shown in Figure 2. SW3 is a three position centre off switch. Diode D14 ensures that if the supply polarity is reversed, power is prevented from reaching the control circuitry. As drawn, the microvalves will still work. There are many possible permutations of this part of the circuitry. F1 is a 20mm quick blow glass fuse.

Figure 11 shows the circuit diagram of blocks 51-54 (Figure 7), IC5 and R43 are components mounted on the vehicle. C20 is the moving vane capacitor illustrated in Figure 6. IC5 is a quad 2 input nand Schmitt trigger of which only one gate IC5D is used, as an oscillator. The inputs of all un-used gates are shown connected to the positive supply. They could instead be connected to the negative rail depending on which is easier for P.C.B.

layout: they must not be left floating.

The frequency at which IC5d will oscillate is mainly dependent on the values of C20, and R43. As previously stated, the actual frequency does not matter as long as it is at least 50 times the maximum frequency which could be obtained from the wheels' rotation, to avoid interference with the frequency resolved from the rotation of the wheel. For an expected maximum road speed of 20 mph, the maximum resolved frequency will be 200 Hz, and the minimum oscillator frequency should be at least 10KHz.

When the wheel is rotating, the frequency of the oscillator will wobble. As an example, suppose the maximum frequency was 110KHz, and the minimum frequency was 90KHz. This gives a mean frequency of 100 KHz. This signal is fed to a P.L.L. phase comparator input, pin 14, of IC6. The other phase comparator input, pin 3, is connected directly to the output of a V.C.O. of this P.L.L., pin 4. R44, R45, R46, and C21 determine the V.C.O. parameters. Capacitor C22 is connected to pin 9 of IC6 which is the control voltage input of the V.C.O.. When power is first applied, the voltage across C22 is zero. Therefore, the V.C.O. will be operating at a very low frequency. Meanwhile the oscillator will be delivering a voltage at a frequency of 100KHz to the phase comparator, which will detect that its input to pin 3 is at a lower frequency. The phase comparator output will therefore go to a logical "1" level outputted at pin 13. This means that C22 will charge via R47. As the voltage across C22 rises, so does the V.C.O. frequency. This continues until the two frequencies are the same and in phase. Once this equilibrium is reached, the phase comparator output pin 13 goes to its high impedance (open circuit) condition so preventing any further charging of C22. If the voltage across C22 remains constant then so does the V.C.O. frequency. The time constant determined by R47 and C22 is chosen to be "long" (e.g. about 5 sec.) so that when the wheel is rotated and the incoming frequency is wobbling about the mean, the phase comparator output pin 13 will be alternating between logical "1" and "O", but this will have only a very small effect on the voltage across C22. This means that the V.C.O.will not be able to "track" the incoming frequency and will thus continue to provide a reference frequency very close to the mean. The phase comparator is thus giving a signal related to the road speed. This signal is then "cleaned" by R48 and C23 to remove any possible glitches as one frequency passes through the other. The time constant formed by R48 and C23 is very short (e.g. about 0.5mS).

The phase comparator output signal is now ready to be compared with Block 52 of Figure 5.

IC7 is a crystal oscillator and 14 stage frequency divider. The crystal XI used in the present case oscillates, as controlled by C24, C25, R49 and R50, at a frequency of 32.768KHz. This is divided down in IC7 to 32Hz, corresponding to a road speed of 3.2 mph (1.42 $ms^{-1}$ )before being outputted at pin 15. Other crystals and other outputs could be used instead, but this is cheap and convenient. This output is now ready for comparison with the wheel output from IC6.

Figure 9 illustrates the circuitry of block 53 of Figure 5. IC8 is another P.L.L., with the phase comparator thereof only being used. The V.C.O. circuitry is inhibited by taking pin 5 to the positive rail. The output of IC8 will be at a logical "O" if the road speed is more than 3.2 mph, and at a logical value "1" if the road speed is less than 3.2 mph.

IC9 is a quad 2 input NAND gate. These four gates are configured as a two input data selector such that when the output of IC8 is at logic "0", the output of IC6 is passed to point K, and when at a logic "1", the output of IC7 is passed to point K. (The supply connections to IC5 and IC9 are not shown).

Figure 12 shows the circuit diagram of blocks 55 -57 of Figure 5 . IC10 is another P.L.L.. The output signal from IC9 is applied to the phase comparator thereof. The V.C.O. output is taken from pin 4 of IC10 to the clock input of IC11 which is a Johnson decade counter, and to point L. This type of counter IC11 has 10 outputs for counts of 0 to 9, the appropriate output going high in turn. If the counter is reset then output 0 goes high. On the next clock pulse the 0 output goes low and the 1 output goes high, and so on. There is another output specifically for cascading stages. This output is taken to the clock of IC12 which is another counter. IC11 has all ten outputs taken to switch SW4, and IC12 has all except the 0 output taken to switch SW5. SW5 and SW4 set the tens and units of the pump adjustment divider. If the switches were set for, say, "64", then at the beginning of a cycle, both IC11 and IC12 will have been reset. The signal from IC10 will cause IC11 to count from 0 to 9. The next pulse will set IC11 back to 0 and IC11 then clocks IC12 once. IC11 now has a count of 0 and IC12 a count of 1. When this has occurred 6 times, then one input of NAND gate IC13c will be high (because SW5 has connected it to the "6" output). When the units counter next reaches "4" then both inputs to IC13c will be high causing its output to go low. R55 and C28 form a pulse stretcher and NAND gate IC13d inverts this pulse which is then used for two purposes: to reset IC11 and IC12; and as the clock signal to IC14.

The reason that the pulse needs stretching is as follows. The pulse is only present when the desired count has been reached and is used to reset those counters, IC11, IC12, which caused the condition to exist. If one of the counters was a bit faster at resetting than the other then erroneous operation would result (i.e. if one counter reset and the other did not). This pulse however should be kept short and in any case, quicker than the input from IC10 to make sure that no pulses from IC10 are "overwritten" by the reset pulse.

IC11 and IC12 act together to prodmce a variable division by any number between 10 and 99. IC14 is in a similar configuration except that it acts alone providing divisions from 1 to 9. Because it acts alone it does not add another decimal digit to the previous divider. In other words, it cannot be considered as a "hundred" decade. IC11 and IC12 form one divider, and IC14 forms the other. For this reason, the total division is ((SW5)(SW4)) x SW6, where SW5 and SW4 provide a two digit number.

Hence the total division will be between 10 and 891. This means that the V.C.O. output (pin 4 of IC10) frequency will be between 10 times and 891 times the input frequency from point K.

The frequency of point L is then divided by block 58 of Figure 7. The exact number that it will be required to divide by is determined according to the type of pump used. The supply connections to IC13 are not shown.

While the method of controlling the head speed described hereinabove gives accurate speed control, it is cheaper, and satisfactory in some cases, to control the head speed using a silicon chip designed for crude control of motor speed. A suitable chip is one intended for use in regulating the speed of a motor in a cassette recorder. Using such a chip, the speed of each head must be set manually, although, in units containing more than one head to run at the same speed, it is possible to control the speed of all the heads by a single manual control. Use of a suitable silicon chip does not permit such an accurate speed control as the phase locked loop method described above, but the cost and space saving are considerable. Since generally an accurate control of pump speed is required, the phase locked loop method is used for control of the pump speed.

Similarly, while the speed pick-up device illustrated in Figure 8, and its accompanying circuitry (Figure 7) provides one way of controlling the pump speed in response to the road speed, a cheaper but less sophisticated method may be used, described with reference to Figure 13.

Figure 3 shows a counter 200 (IC4020), controlled by pulses from an oscillator 202. A speed setting switch mounted on an operating panel (not shown) enables the frequency of the oscillator 202 to be set by varying its input voltage $V_{CO}$. Two NAND-gates 204 and 206 form a sequential pulse generator, generating pulses in response to rotation of the wheel of the vehicle to which the fluid delivery unit is mounted. At the trailing edge of a pulse from the wheel, NAND-gate 204 generates a short pulse whose leading edge causes a dual D-type flip-flop 208 to be clocked at its clock pulse input, pin 3. When the flip-flop 208 is clocked, the information currently on its data inputs, D1, D2 (pins 5 and 9) is latched to its outputs Q1, $\bar{Q}1$, $\bar{Q}2$ (pins 2, 1 and 12 respectively).

The trailing edge of the short pulse generated by NAND-gate 204 causes a second short pulse to be generated at the output of the NAND-gate 206. This second pulse is used to reset the counter 200 to zero. The sequence is subsequently repeated, with the oscillator causing the counter to count upwards again until it is reset by a pulse from NAND-gate 206.

The counter 200 is a binary counter having 9 digital outputs; in the system the three least significant bits generated by the counter 200 are not used.

Three outputs (4, 5, 6) from the counter 200 are fed into a NAND-gate 210, whose output forms a data input D1 of the flip-flop 208, and the three other outputs (pins 7, 8, 9) are fed to a NOR-gate 212, whose output forms the second data input, D2, of the flip-flop 208. Consequently, the information currently present at data inputs D1 and D2 of the flip-flop 208 depends on what count the counter 200 has reached when the wheel pulse arrives at the input of NAND gate 204. When the count is low, the information is interpreted as the wheel speed being too high, and when the count is high, the wheel speed is interpreted as being too low. Thus, the counter acts as a timer, measuring the relative time between wheel pulses.

If the outputs 4 to 9 of the counter 200 are considered to represent 6 bits of a binary number, it will be appreciated that only the binary number 7 (111) will cause the output of NAND-gate 210 to be zero and the output of NOR-gate to be 1. In fact, this number can be any number between 7 and 7.999 (if the three least significant bits are not used), which gives a tolerance of about ± 6% for the actual speed. This count 7 is taken as the "correct" speed count. If the count reaches 32 (100000), the output 9 of counter 200 goes to logic value "1". Since this high count would indicate a very slow speed (approximately 1/4 of the correct speed) it is used as a "stop" signal which inhibits the oscillator, so preventing the count from ever exceeding 32: if this were not done, then a count of 64 + 7 would also be shown as "correct", and speeds above and below the reference value would be construed accordingly.

The "stop" signal may also inhibit the oscillator in the phase locked loop which is used to control the speed of the pump (described earlier with reference to, e.g., Figure 4). The effect of this is to have any pump speed greater than zero being interpreted as being "too fast", and consequently pump operation is stopped.

Two NOR-gates 214 and 216 decode the latched information at $\bar{Q}1$, Q1 and $\bar{Q}2$ into three output signals corresponding to "too fast", "too slow", and "correct". The "two fast" and "too slow" outputs are used to control light-emitting diodes, via a single transistor stage (not shown). The light-emitting diodes are fitted to the operating panel, and are arranged so that one will light up if the speed is interpreted as being "too fast", and the other will light up if the speed is interpreted as being "too slow". An audible warning may also be given. The actual speed is set by an operator of the unit, using a switch on the operating panel, calibrated in miles per hour.

The device used to generate wheel pulses from rotation of the wheel may be, for example, magnetic reed type switches.

If the oscillator 202 used in the circuit of Figure 13 is the same as that used in the speed control circuit (Figure 4) IC2, there arises the following advantage:-

Since the operation of the voltage controlled oscillator is substantially linear, if two such oscillators are driven from a common control voltage, then a change in this control voltage will produce the same percentage change in the output frequencies of both oscillators. This should be true even if both oscillators are operating at very different frequencies. Consequently, there is the possibility of making the pump speed proportional to the road speed as selected by the switch on the operating panel. Further, if the control voltage to the voltage controlled oscillator shown in Figure 4 is reduced to a known fraction of the control voltage derived from the road speed selection switch, there should still be a linear relationship between the output frequencies of both oscillators. This means that a variable resistor feeding the voltage controlled oscillator controlling the pump speed from the original control voltage could be calibrated in terms of fluid volume per area, without reference to road speed.

Since the flow rates delivered per revolution from different pumps may vary, and, for any given pump, the flow rate varies due to pump wear, problems may arise if the pump speed and road speed are linked together as above. Thus, in some cases it may be apposite to separate the control of pump speed and road speed so that the setting can be varied individually, and consequently flow rate variations due to wear of the pump may be taken into account.

Further, if the pump speed and road speed are linked together, the range over which the delivery rate of fluid from the unit can be adjusted is limited, dependent on the range over which the pump speed can be controlled, typically 1:10, and over which the road speed can be controlled, desirably 1:5 (2 mph (0.89 $ms^{-1}$) to 10 mph (4.45 $ms^{-1}$). With control of the road speed and the pump speed separated, and with a control of the flow rate through the pump of, for example 3:1, there is an available range over which the delivery rate of fluid can be adjusted of 15:1 (for a road speed range of 5:1).

In a further embodiment, the equipment may be adapted for use by an operator on foot. In this case, the desired speed may be set to, for example, 3 mph (1.35 $ms^{-1}$), and it is then the responsibility of the operator to maintain the correct walking speed

In Figure 14, the same reference numerals are used to designate components having substantially the same function as in preceding embodiments.

The apparatus of Figure 14 comprises a central processing unit (CPU) 250 which receives input signals from a wheel pick-up 100 (which may be similar to that shown in Figures 8a and 8b), a dose selector 104 and manual controls 252. The CPU 250 delivers a signal to a pump control unit 106 which signal, in effect, tells the pump control unit 106 what the output of the pump 102 ought to be on the basis of the travel speed and the selected dose rate (i.e. the selected area concentration). The pump control unit 106 comprises a comparator which receives a signal from the pump 102 representing the actual output of the pump and compares this signal with the signal produced by the CPU 250. If these two signals are not the same (i.e. the pump output is higher or lower than it ought to be),the pump control unit 106 delivers a correcting signal to increase or decrease the pump output accordingly.

The pump 102 delivers fluid to left and right hand delivering heads 112, 114 via microvalves 254 controlled by the CPU 250. The CPU 250 also controls the motors of the spinning discs in the heads 112, 114, in order to maintain the rotary speed of these discs at a desired value. For this purpose, the CPU 250 may comprise a phase locked loop as described above.

A loudspeaker 256 is also controlled by the CPU 250, which includes voice synthesizer circuitry for this purpose.

The pump 102 is preferably a positive displacement pump such as a peristaltic pump, in which case the operating speed of the pump can be used to represent the pump output. Alternatively, however, the pump output could be monitored by means of a flowmeter, for example.

In operation, the manual controls 252 may be placed in, for example, an automatic setting, in which case the heads 112 and 114 on both sides of the apparatus would be operative and the pump would supply fluid to them in dependence on the desired area concentration of herbicide to be applied and in dependence on the travel speed. Consequently it is not necessary for the operator to maintain any particular speed. If the apparatus stops, fluid ceases to be supplied to the heads 112, 114. The manual controls 252 may include a setting in which the heads will continue to operate (i.e. the discs will rotate) without herbicide being supplied. Such a setting may be useful, for example, when turning round at the end of an area of land to be covered, or when passing cleaning fluid through the duct work. Also, the manual controls 252 may provide for only some of the heads, for example only those on one side of the apparatus, to be operable. This can be effected by shutting one or other of the microvalves 254.

The loudspeaker 256 may replace the alarm circuitry of the previous embodiments by giving audible warning of failure of any part of the apparatus, and it may also be used to give instructions to the operator, for example by indicating that the apparatus should be cleaned when a spraying operation has been completed.

CLAIMS

1. Apparatus for distributing fluid over the ground, the apparatus comprising a delivery member (112,114) and a pump (102) for supplying the fluid to the delivery member (112,114), characterized in that control means (106) for the pump (102) is responsive to a travel speed signal, representing the travel speed of the apparatus across the ground, and a dose signal, representing the required area concentration of fluid to be distributed, the control means (106) being adapted to generate a pump control signal to which the pump (102) is reponsive to supply fluid to the delivery member at a flow rate corresponding to the desired area concentration.

2. Apparatus as claimed in claim 1, characterized in that the control means (106) is also responsive to a pump output signal, the control means (106) comprising a comparator for comparing the pump control signal with the pump output signal and for delivering a correcting signal for adjusting the pump output in the event that the pump output signal and the pump control signal represent respective pump outputs which are not equal.

3. Apparatus as claimed in claim 1 or 2, characterized in that the pump (102) is a positive displacement pump whereby the pump output is proportional to the pump speed.

4. Apparatus as claimed in claim 3, characterized in that the pump (102) is a peristaltic pump.

5. Apparatus as claimed in any one of the preceding claims, characterized in that the pump (102) is driven by a voltage controlled motor, whereby the speed of the pump depends on its operating voltage.

6. Apparatus as claimed in any one of the preceding claims, characterized in that the delivery member (112,114) comprises a rotary element from which the fluid is discharged, in use, by centrifugal force, the rotary speed of the rotary element being controlled by the control means (106).

7. Apparatus as claimed in any one of the preceding claims, characterized in that the delivery member (112,114) is one of a plurality of delivery members.

8. Apparatus as claimed in claim 7, characterized in that the control means (106) is responsive to a manually operable control device to cause operation of at least one but not all of the delivery members (112,114).

9. Apparatus as claimed in any one of the preceding claims, characterized in that the control means (106) is responsive to a manually operable control device to cause operation of the or each delivery member (112,114) while the pump remains inoperative.

10. Apparatus as claimed in any one of the preceding claims, characterized in that the travel speed signal is generated by a device comprising a pair of discs mounted respectively on a frame of the apparatus and on a ground wheel of the apparatus, the discs functioning as a capacitor the capacitance of which fluctuates during rotation of the wheel relative to the frame.

0155850

1/14

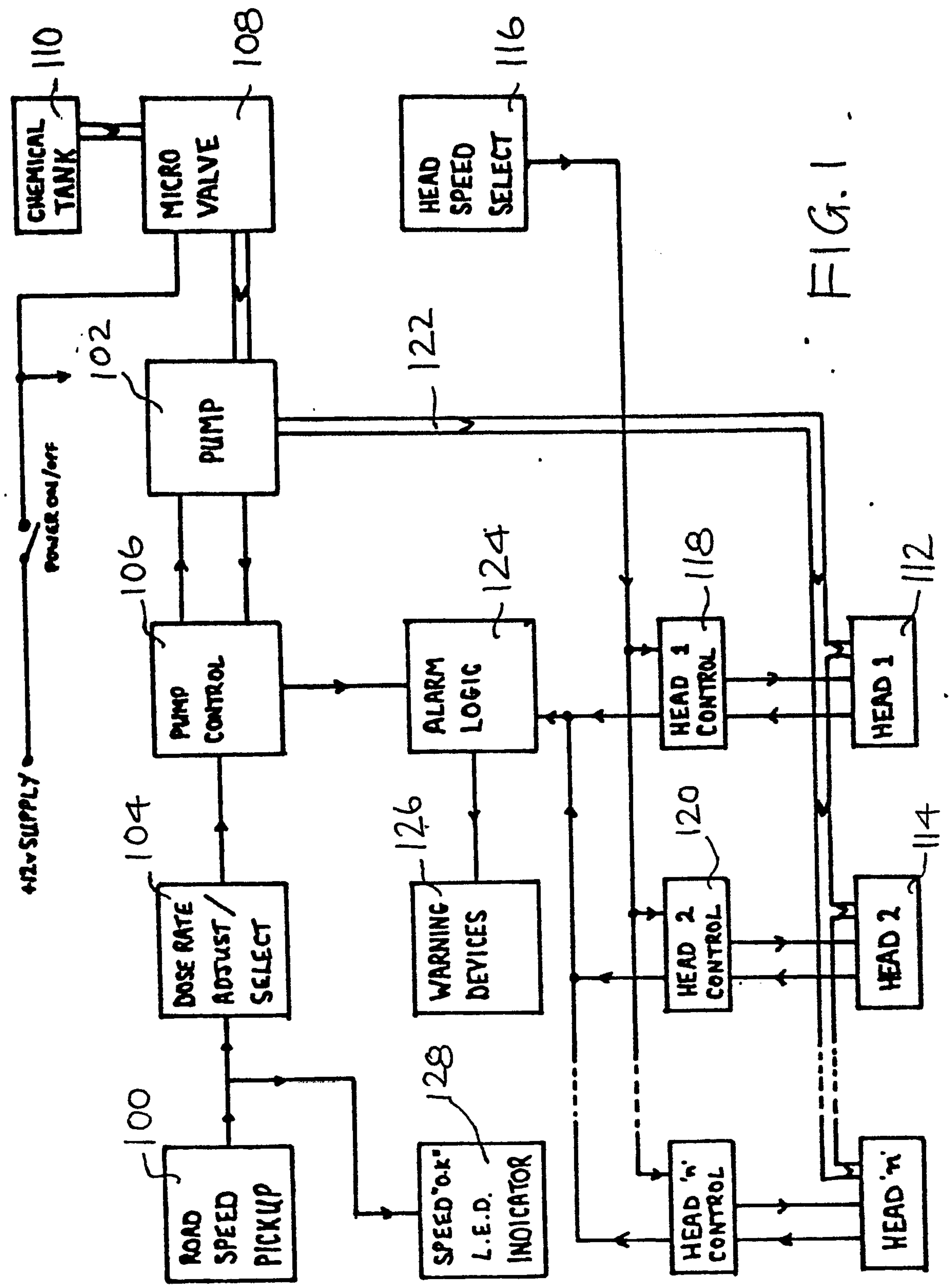


FIG. 1

0155850

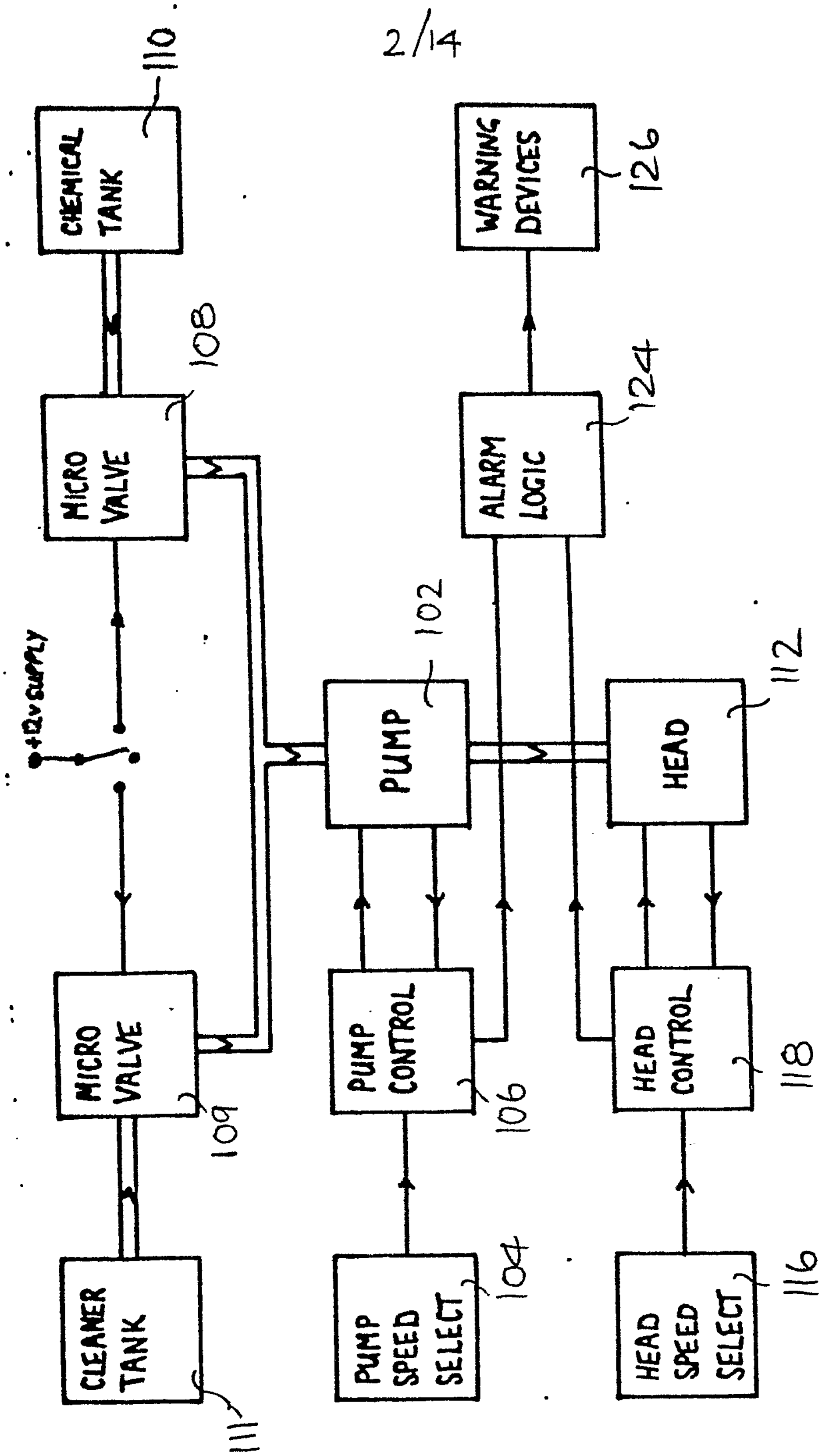


FIG. 2

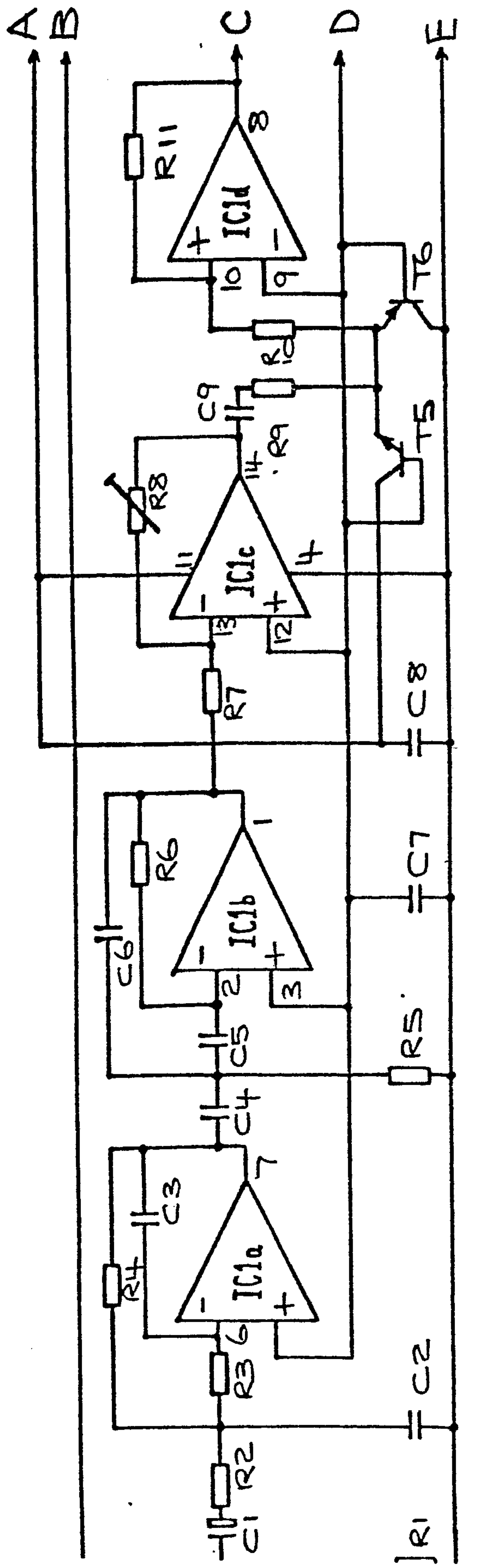
A
B
C
D
E
R11
IC1d
T6
R10
C9
R9
T5
R8
IC1c
R7
C8
R6
IC1b
C7
C6
C5
R5
C4
C3
R4
IC1a
R3
C2
R2
C1
R1

FIG. 3

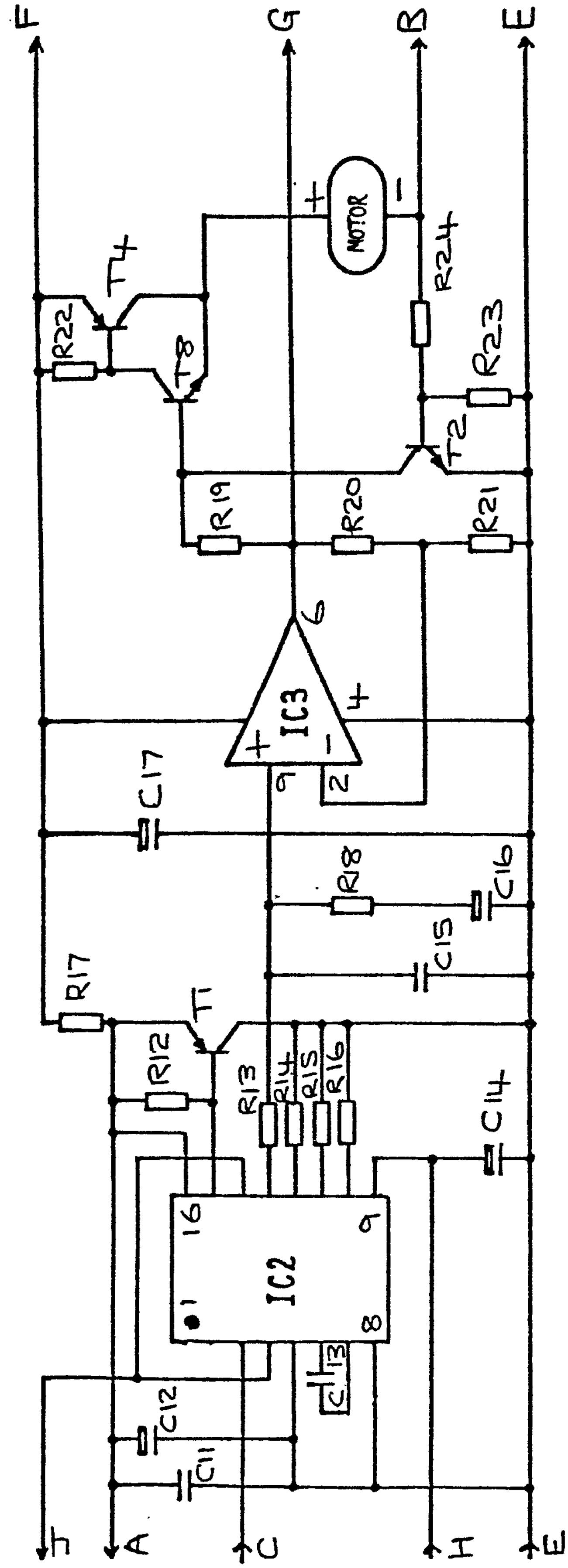
F
G
B
E
MOTOR
+
-
T4
T8
T2
T1
R22
R24
R23
R19
R20
R21
6
4
IC3
+
-
9
2
C17
R18
C16
C15
R17
R12
R13
R14
R15
R16
C14
16
9
IC2
1
8
C13
C12
C11
J
A
C
H
E

FIG. 4

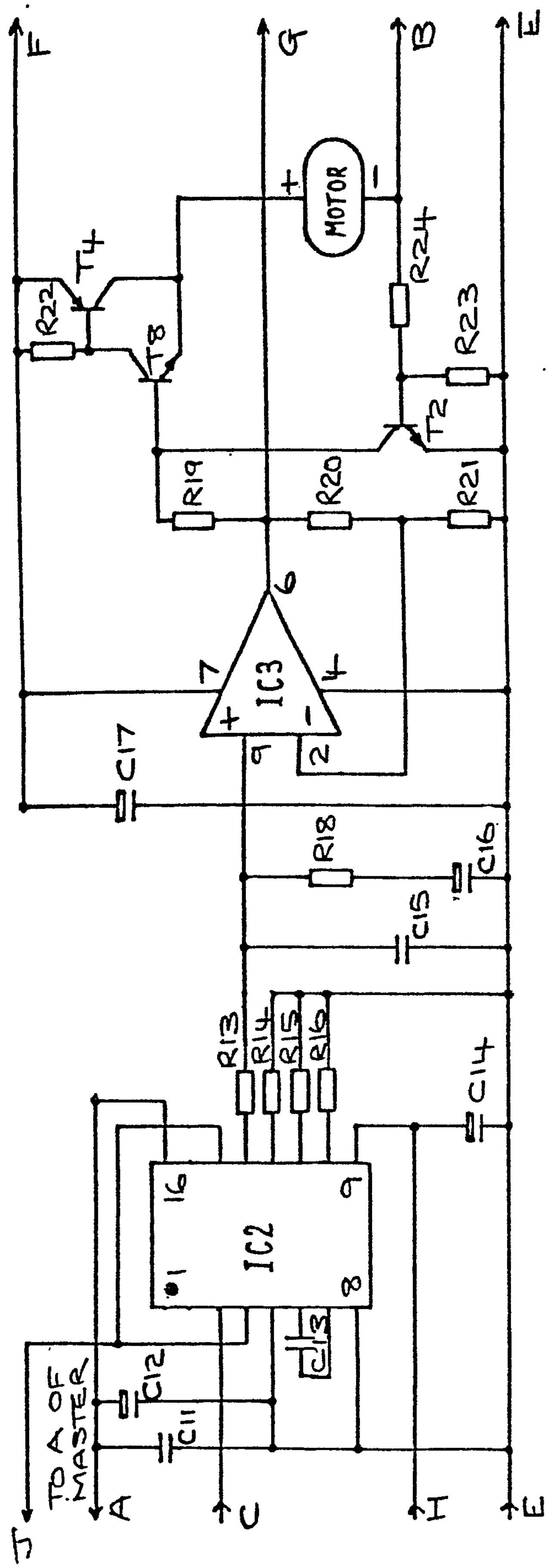
F
G
B
E
MOTOR
+
-
T4
R22
T8
R24
R23
T2
R19
R20
R21
IC3
7
6
4
2
C17
R18
C16
C15
R13
R14
R15
R16
C14
IC2
16
1
9
8
C13
C12
C11
TO A OF MASTER
J
A
C
I
E

FIG. 5

0155850

6/14

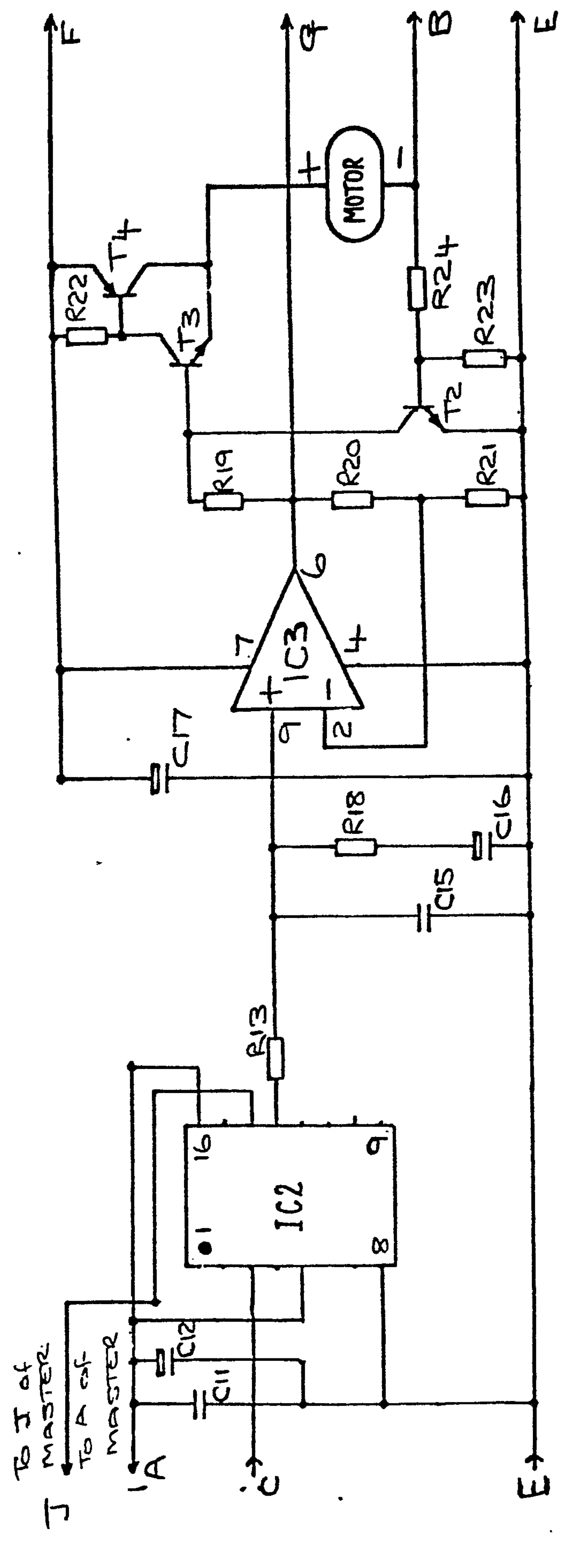


FIG. 6

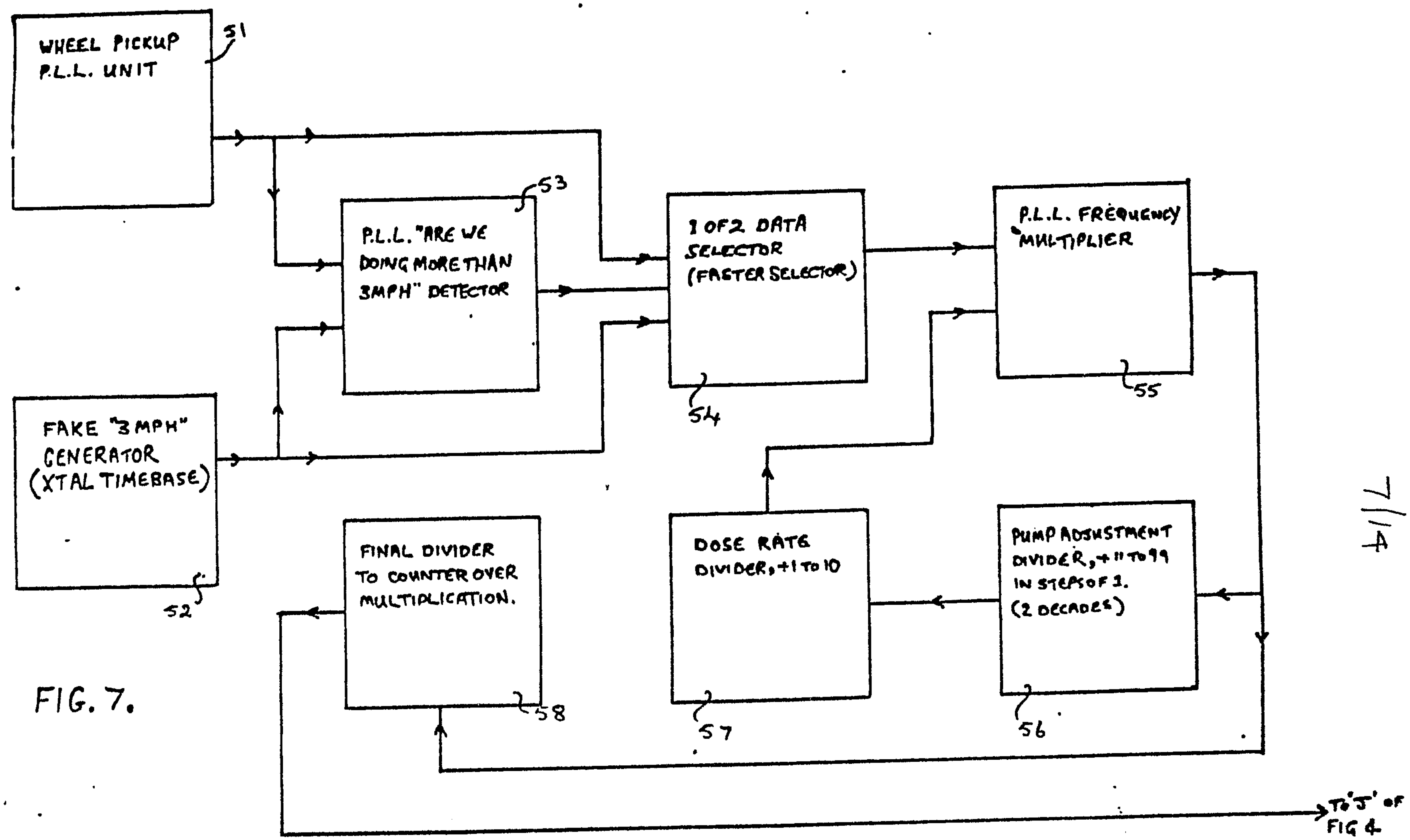
WHEEL PICKUP P.L.L. UNIT
51
FAKE "3MPH" GENERATOR (XTAL TIMEBASE)
52
P.L.L. "ARE WE DOING MORE THAN 3MPH" DETECTOR
53
1 OF 2 DATA SELECTOR (FASTER SELECTOR)
54
P.L.L. FREQUENCY MULTIPLIER
55
PUMP ADJUSTMENT DIVIDER, ÷11 TO 99 IN STEPS OF 1. (2 DECADES)
56
DOSE RATE DIVIDER, ÷1 TO 10
57
FINAL DIVIDER TO COUNTER OVER MULTIPLICATION.
58
TO 'J' OF FIG 4

FIG. 7.

0155850

8/14

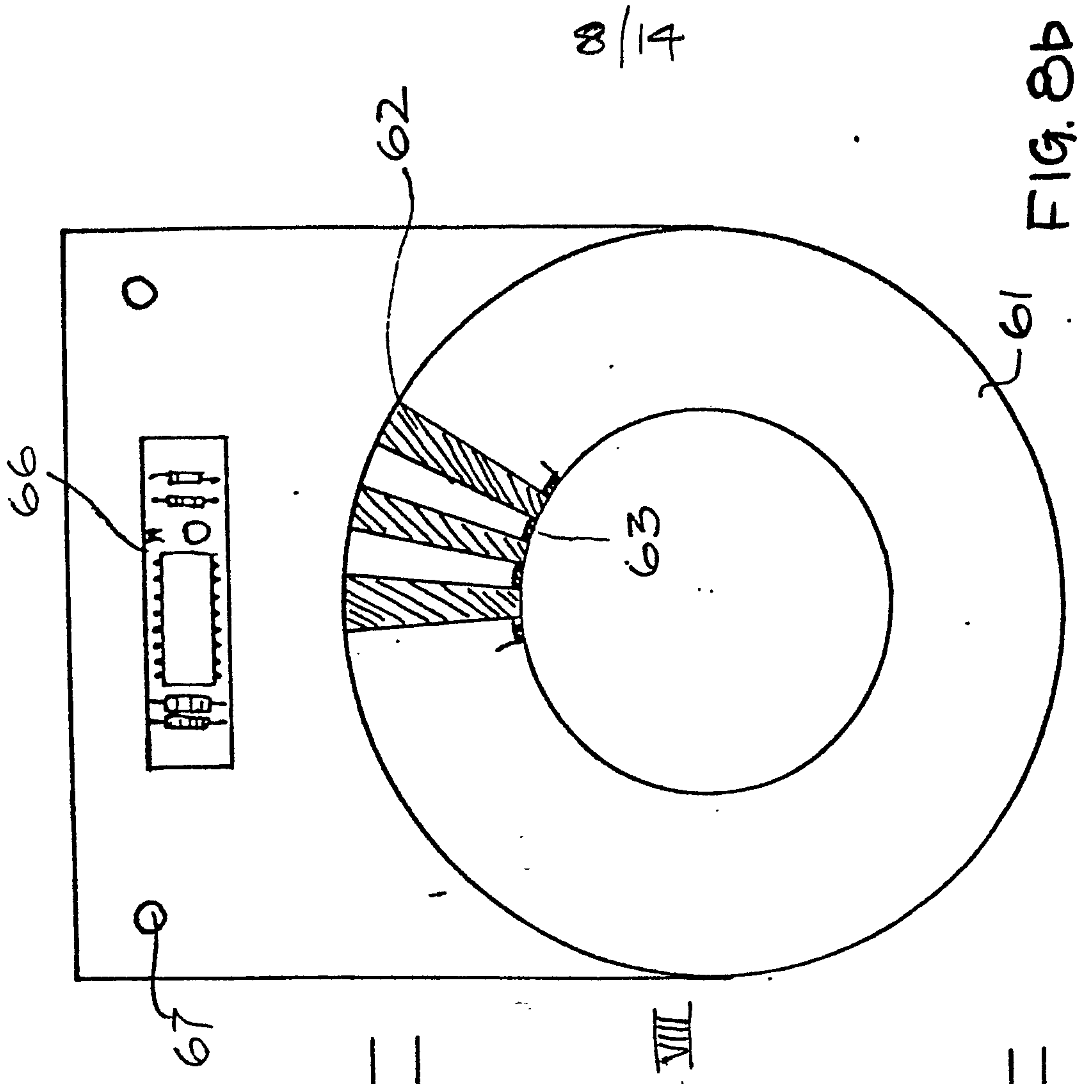


FIG. 8b

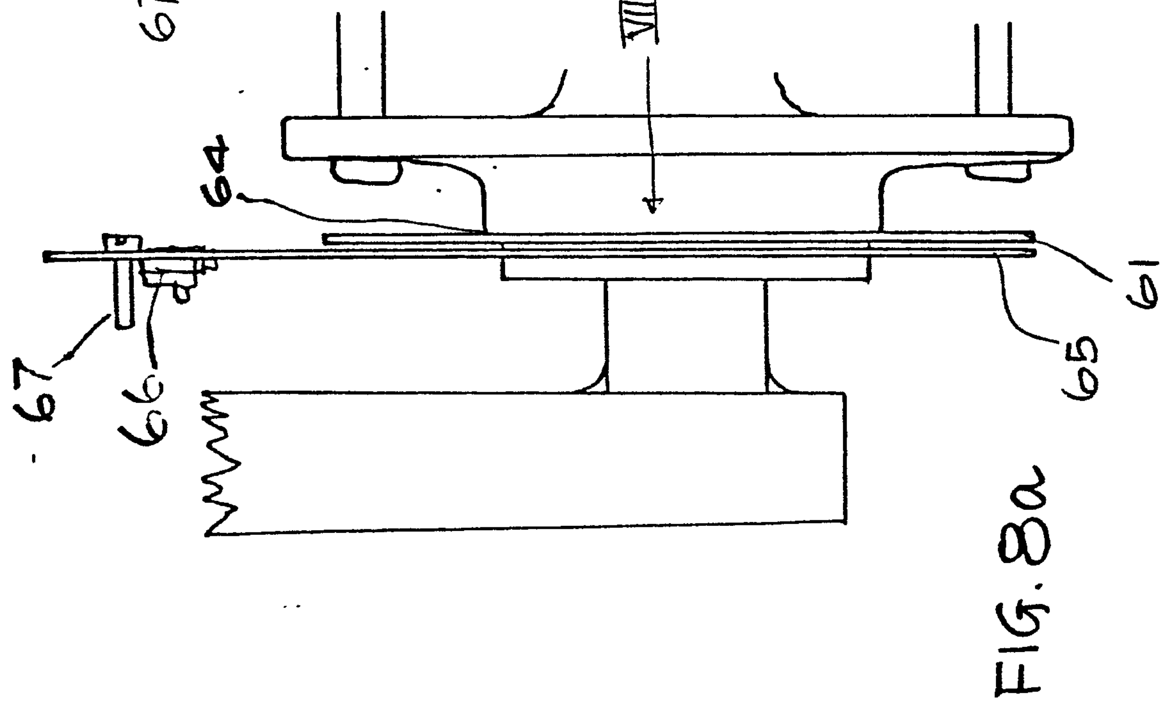


FIG. 8a

0155850

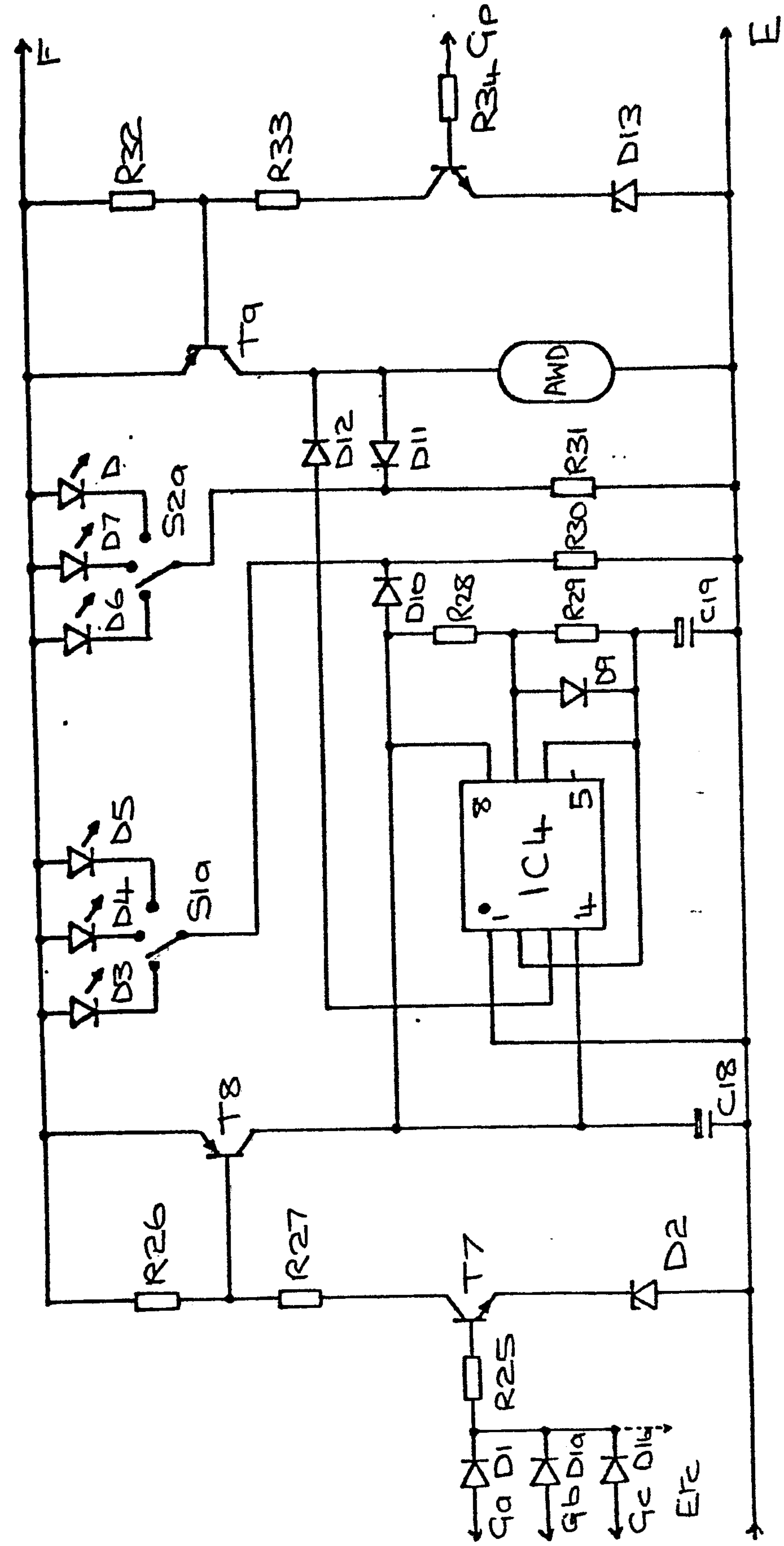


FIG. 9

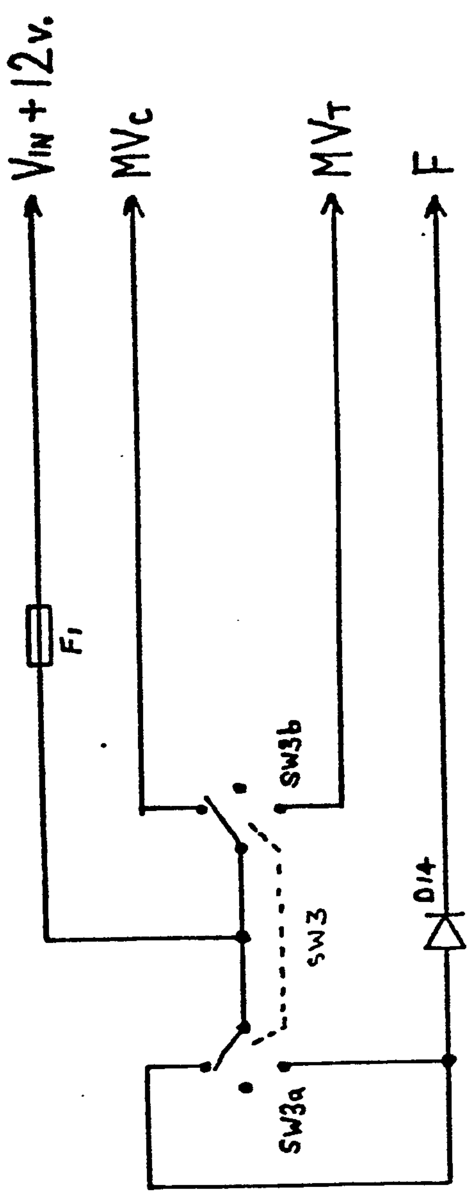


FIG. 10b

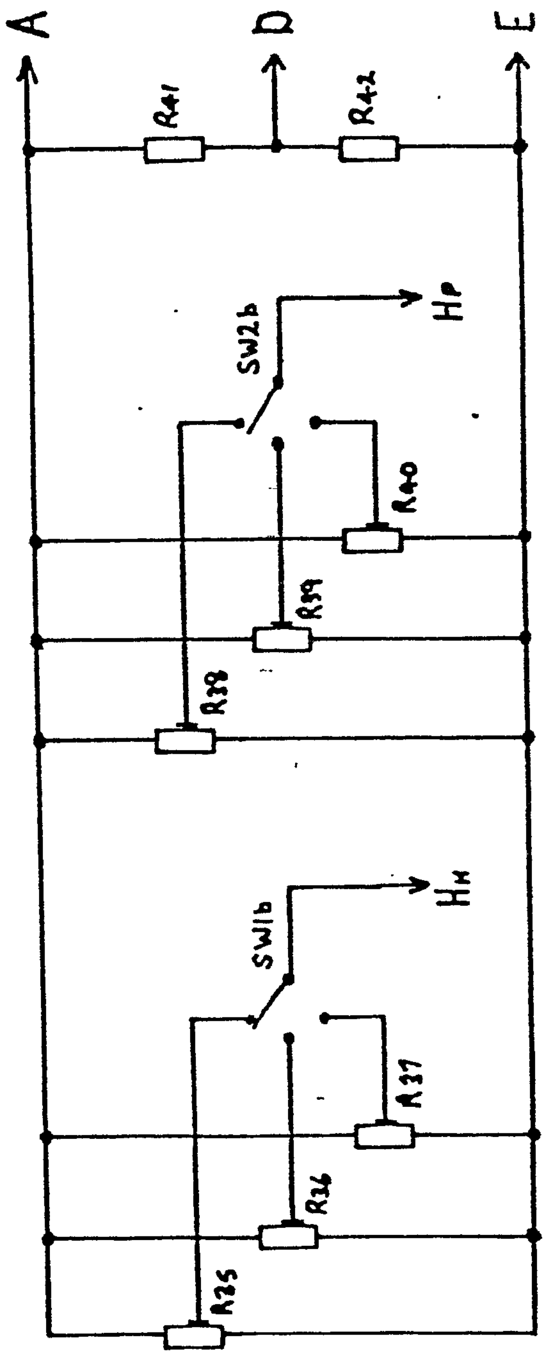


FIG. 10a

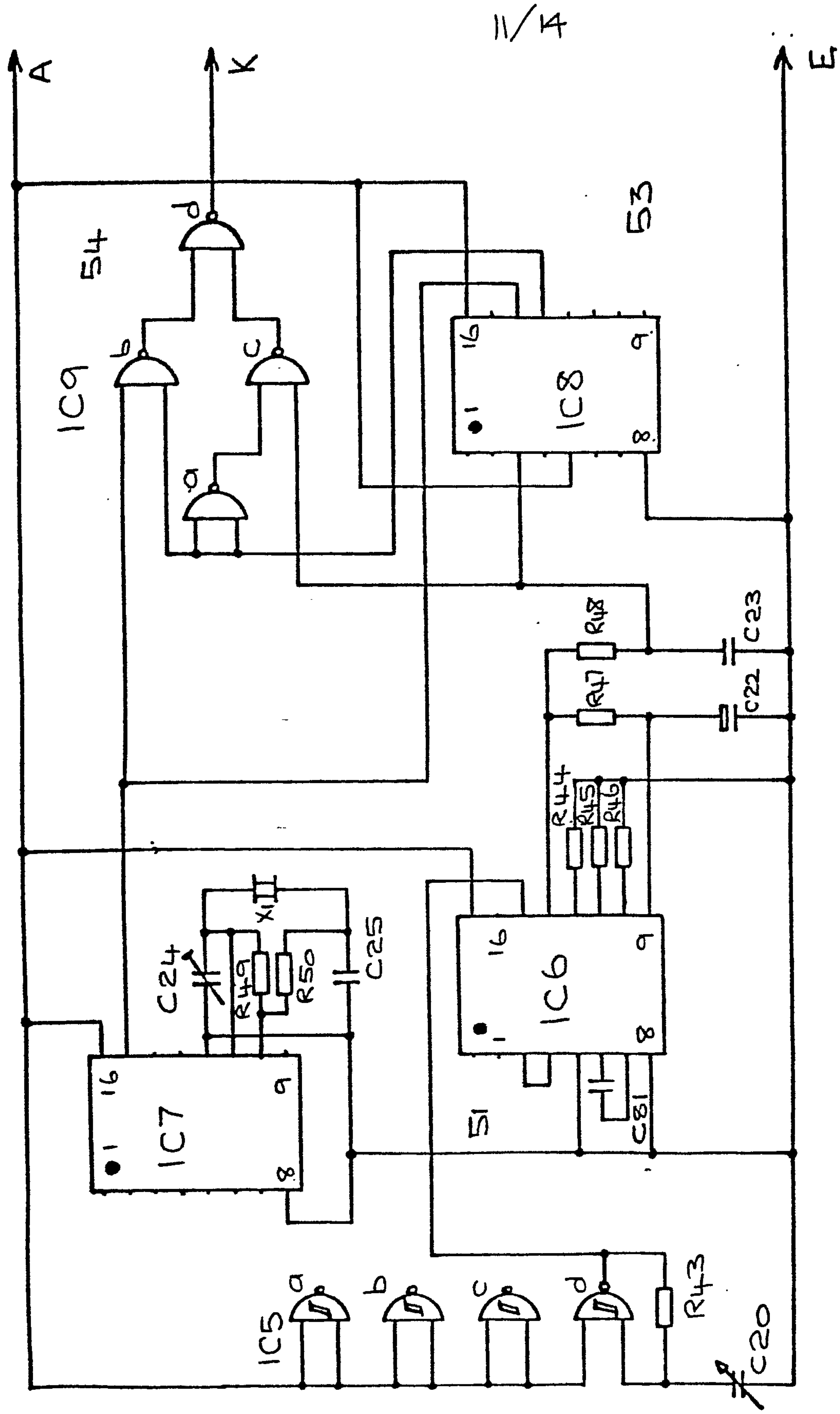
A
K
E
54
53
51
IC5
IC6
IC7
IC8
IC9
a
b
c
d
R43
R44
R45
R46
R47
R48
R49
R50
C20
C22
C23
C24
C25
C31
X1
1
8
9
16

FIG. 11

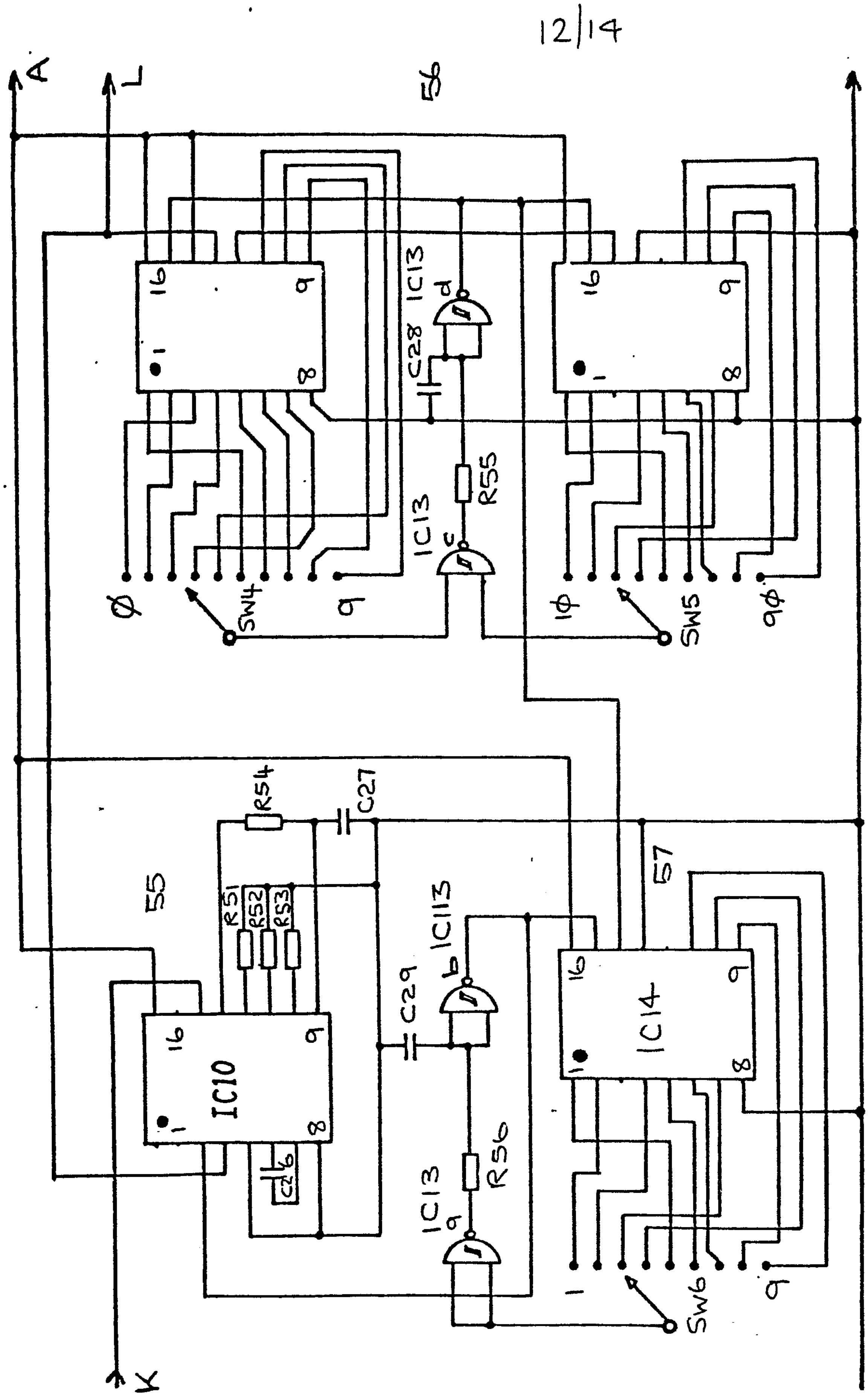
A
L
E
K
55
56
57
IC10
IC14
IC13 d
IC13 c
IC13 b
IC13 a
C26
C27
C28
C29
R51
R52
R53
R54
R55
R56
SW4
SW5
SW6
16
9
8
1
Ø
1φ
9φ

FIG. 12

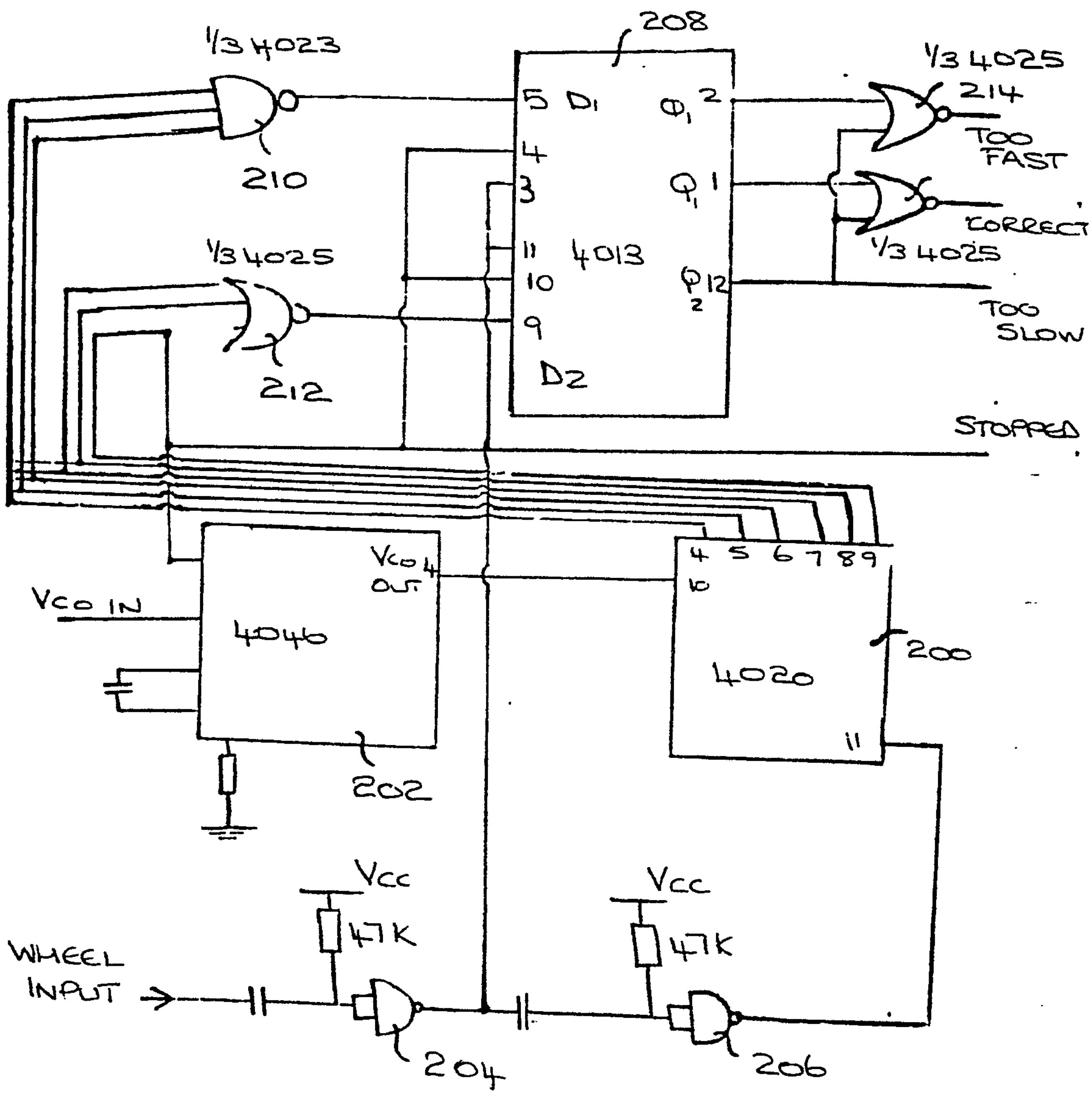

208
1/3 4023
210
5 D1
4
3
11
10
9
4013
D2
Q1 2
Q1 1
Q2 12
1/3 4025
214
TOO FAST
CORRECT
1/3 4025
TOO SLOW
1/3 4025
212
STOPPED
4 5 6 7 8 9
10
VCO IN
4046
Vco 4 OUT
4020
200
11
202
Vcc
47K
WHEEL INPUT
204
Vcc
47K
206


Fig. 13

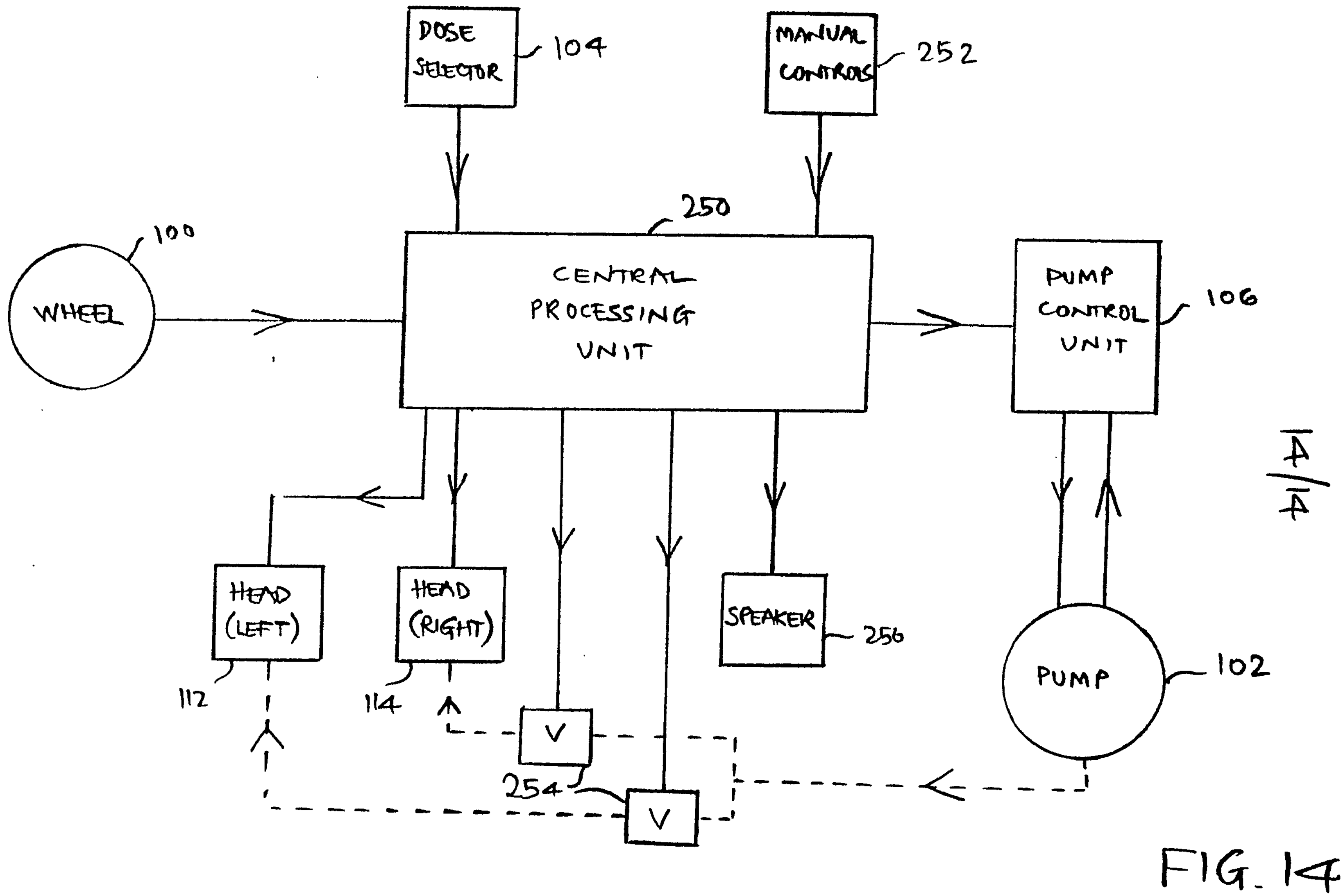
DOSE SELECTOR
104
MANUAL CONTROLS
252
250
100
WHEEL
CENTRAL PROCESSING UNIT
PUMP CONTROL UNIT
106
HEAD (LEFT)
HEAD (RIGHT)
SPEAKER
256
PUMP
102
112
114
V
254
V

FIG. 14